# EUROPÄISCHE PATENTSCHRIFT

(11) **EP 4 295 065 B1**
(45) Veröffentlichungstag und Bekanntmachung des Hinweises auf die Patenterteilung: **08.10.2025**
(21) Anmeldenummer: 22719813.2
(22) Anmeldetag: 28.03.2022
(51) Int. Cl.: G05D 16/20, F16K 11/16, F16K 31/08, F16K 31/06, G05D 7/06

(54) **3/2-WEGEVENTIL**
3/2-WAY VALVE
DISTRIBUTEUR 3/2

(30) Priorität: 29.03.2021 DE 102021107891
(43) Veröffentlichungstag der Anmeldung: 27.12.2023
(73) Patentinhaber: Samson Aktiengesellschaft, 60314 Frankfurt am Main (DE)
(72) Erfinder: KOLBENSCHLAG, Stefan, 64291 Darmstadt (DE)
(74) Vertreter: noventive Patentanwaltsgesellschaft mbH
(86) Internationale Anmeldenummer: PCT/EP2022/058152
(87) Internationale Veröffentlichungsnummer: WO 2022/207567

(56) Entgegenhaltungen:
- EP-A1- 2 256 389
- DE-A1- 3 134 613
- DE-B- 1 247 792
- US-A- 4 253 493
- US-A1- 2009 302 250
- US-B2- 9 429 242
- US-B2- 9 915 360

## Beschreibung

### Gebiet der Erfindung

Die Erfindung betrifft ein 3/2-Wegeventil zum Steuern und/oder Regeln eines Steuerdrucks eines unter Druck stehenden Fluids, z.B. Druckluft, mittels eines elektrischen Signals.

Die Positionsregelung von pneumatisch angetriebenen Stellventilen, insbesondere solchen mit "smarten" Stellungsreglern, wird normalerweise durch IP-Wandler (Strom-Druck-Wandler) mit sehr niedriger Leistungsaufnahme (maximal einige mW) mit nachgeschalteten Pneumatikverstärkern bewerkstelligt. Gründe hierfür sind vor allem das in der Prozessleittechnik genormte Eingangssignal (4-20 mA), welches auch die Energie für die IP-Wandler zur Verfügung stellt (sog. Zweileitertechnik), aber auch Explosionsschutz-Anforderungen.

Moderne Entwicklungen in der Prozessleittechnik gehen jedoch dahin, dass in Zukunft derart geringe Leistungsaufnahmen nicht mehr zwingend vorausgesetzt werden. Die sog. 4-Leitertechnik und Bussysteme erlauben höhere elektrische Leistungsaufnahmen der Steuerungs- bzw. Regelkomponenten. Wegen des verstärkten Einsatzes moderner Kommunikationsschnittstellen (z.B. APL, bluetooth) werden solche Systeme, die höhere elektrische Leistungen bereitstellen, immer stärkere Verbreitung finden.

Die erhöhte, zur Verfügung stehende elektrische Leistung erlaubt es, neue Wege bei der Positionsregelung von pneumatisch angetriebenen Stellventilen zu beschreiten.

### Stand der Technik

Aus der Druckschrift DE 10 2015 122 229 A1 ist ein elektromagnetisch angetriebenes Ventil bekannt, das zum Betätigen eines druckmittelbetriebenen Antriebs eines Prozess-Stellventils dienen kann. Da es sich um ein einfaches Ventil und nicht um ein 3/2-Wegeventil handelt, ist eine Verschaltung von mindestens zwei derartigen Ventilen erforderlich, um den Antrieb eines Prozessventils zu steuern bzw. zu regeln. Dies bedeutet einen höheren Aufwand, insbesondere was den Platzbedarf für die Ventile selbst sowie die Leitungen zu ihrer Verschaltung angeht, aber auch in Bezug auf die Logik und die Impulse zur Steuerung bzw. Regelung dieser Ventile.

Elektromagnetisch angetriebene 3/2-Wegeventile sind beispielsweise aus den Druckschriften DE 10 2015 005 369 A1 oder DE 10 2018 124 310 A1 bekannt. Bei diesen 3/2-Wegeventilen kommt ein Antrieb zum Einsatz, der allerdings nicht für eine stufenlose, proportionale Steuerung des Ventils geeignet ist. Dabei handelt es sich um einen ortsfesten Dauermagneten zwischen zwei Spulen. Dieser Antrieb bewegt einen Steueranker, der wechselseitig jeweils einen der beiden Ventilsitze verschließt. Die beiden Ventilsitze sind also stets entweder vollständig geöffnet oder vollständig verschlossen. Die Druckschrift US 9 915 360 B2 beschreibt ein 3/2-Wegeventil nach dem Oberbegriff von Anspruch 1.

### Aufgabe

Aufgabe der Erfindung ist es, ein 3/2-Wegeventil anzugeben, das für die direkte Steuerung eines fluidischen Antriebs eines Stellventils geeignet ist, das insbesondere ein Fluid mit einem Eingangsdruck von bis zu 8 bar abhängig von einem elektrischen Eingangssignal proportional steuern und/oder regeln kann, keine nachgeschalteten Fluid-Druckverstärker benötigt und eine möglichst geringe elektrische Leistungsaufnahme hat.

### Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird ein 3/2-Wegeventil zum Steuern und/oder Regeln eines Steuerdrucks eines unter Druck stehenden Fluids mittels eines elektrischen Signals vorgeschlagen. Das 3/2-Wegeventil hat drei Fluid-Anschlüsse: einen Eingang für das unter einem Eingangsdruck stehende Fluid, einen Steuerausgang für das unter dem Steuerdruck stehende Fluid und einen Entspannungsausgang für das Fluid gegen einen Basisdruck, der niedriger ist als der Eingangsdruck. Handelt es sich bei dem Fluid um Druckluft, dient als Basisdruck i.d.R. der Umgebungsdruck, d.h. der Entspannungsausgang entlüftet in die Atmosphäre. Das 3/2-Wegeventil kann eine Fluidverbindung zwischen dem Eingang und dem Steuerausgang, sowie zwischen dem Steuerausgang und dem Entspannungsausgang herstellen. Dem Eingang ist ein Eingangsventilsitz mit einem Eingangsventilglied nachgeschaltet, während dem Entspannungsausgang ein Entspannungsventilsitz mit einem Entspannungsventilglied vorgeschaltet ist. Sowohl das Eingangsventilglied als auch das Entspannungsventilglied haben jeweils eine Schließstellung. Ferner hat das 3/2-Wegeventil einen Anker, der sowohl das Eingangsventilglied als auch das Entspannungsventilglied betätigt. Dazu bewegt sich der Anker linear entlang einer Achse. Bei dem Anker handelt es sich um einen entlang der Achse magnetisierten Permanentmagneten. Das 3/2-Wegeventil hat außerdem einen elektromagnetischen Antrieb, der den Anker derart antreibt, dass er abhängig vom elektrischen Signal eine gewünschte Position einnimmt. Der elektromagnetische Antrieb hat mindestens eine Spule. Die Spule ist bezogen auf die Achse radial außerhalb des Ankers angeordnet. Bei diesem 3/2-Wegeventil ist der Anker vom Eingangsventilglied und vom Entspannungsventilglied derart entkoppelt, dass das Eingangsventilglied und das Entspannungsventilglied einer Bewegung des Ankers nur bis zur jeweiligen Schließstellung folgen.

Dieses 3/2-Wegeventil ist kostengünstig herstellbar und robust. Ein elektrisches Ansteuersignal, z.B. ein Strom von bis zu 600 mW, wird direkt in proportional steuerbaren Ausgangsdruck bzw. Massendurchfluß gewandelt, wobei sämtliche Drücke zwischen dem Eingangsdruck und dem Basisdruck erreicht werden können. Damit ist das 3/2-Wegeventil beispielsweise für die direkte Steuerung eines pneumatischen Antriebs eines Prozess-Stellventils hervorragend geeignet, vorausgesetzt, dass die elektrische Leistungsaufnahme des 3/2-Wegeventils erfüllt werden kann. In diesem Fall kann auf die sonst üblichen empfindlichen IP-Wandler und viele Zusatzkomponenten wie z.B. pneumatische Vordruckminderer, Luftleistungs- oder Volumenstromverstärker, pneumatische Durchflussregler und zusätzliche Dichtungs- und Filterelemente usw. verzichtet werden, was die Ansteuerung solcher Prozess-Stellventile deutlich vereinfacht und insbesondere auch kostengünstiger gestaltet.

Erfindungsgemäß ist bei dem 3/2-Wegeventil der Eingangsventilsitz entlang der Achse des Ankers angeordnet, wobei Eingangsventilsitz und Eingangsventilglied derart orientiert sind, dass das Eingangsventilglied zum Öffnen in Richtung vom Anker weg aus dem Eingangsventilsitz gehoben wird. Hierzu weist das 3/2-Wegeventil ein Eingangsventil-Betätigungselement auf, welches vom Anker aus um den Eingangsventilsitz herumgreift und das Eingangsventilglied von der vom Anker abgewandten Seite aus betätigt. Der Eingangsventilsitz muss hierbei nicht genau auf der Achse liegen, sondern lediglich parallel dazu. Somit ist eine leicht versetzte Anordnung ohne Weiteres möglich. Als Eingangsventilglied dient bevorzugt eine Kugel.

Das Eingangsventil-Betätigungselement ermöglicht, das Eingangsventilglied durch die Bewegung des Ankers zu betätigen, obwohl Eingangsventilglied und Eingangsventilsitz wie beschrieben orientiert sind. Diese Anordnung ist vor allem bei hohen Eingangsdrücken von bis zu 8 bar von Vorteil. Außerdem gewährleistet sie die benötigte Entkopplung der Bewegung von Anker und Eingangsventil-Betätigungselement bzw. Eingangsventilglied.

Die Betätigung des Eingangsventilglieds wird erleichtert, wenn das 3/2-Wegeventil eine erste Betätigungskappe aufweist, welche Bewegungen des Ankers an das Eingangsventil-Betätigungselement überträgt.

Besonders bevorzugt wird eine Weiterbildung des 3/2-Wegeventils, bei der das Eingangsventil-Betätigungselement eine Mehrzahl von vorzugsweise 3 Verbindungsstangen aufweist. Die Verbindungsstangen sind parallel zur Achse an dem Eingangsventilsitz vorbei angeordnet und werden von der Betätigungskappe betätigt. Dadurch lässt sich die Bewegung des Ankers besonders gleichmäßig auf das Eingangsventilglied übertragen. Insbesondere wird ein Verkanten des Eingangsventil-Betätigungselements vermieden.

Eine besonders gute Führung des Eingangsventil-Betätigungselements wird erreicht, wenn das 3/2-Wegeventil eine parallel zur Achse angeordnete Führungshülse aufweist, und wenn das Eingangsventil-Betätigungselement einen Zapfen aufweist, der in der Führungshülse geführt wird.

In Strömungsrichtung des Fluids gesehen, liegt vor Passieren des Eingangsventilsitzes der Eingangsdruck an. Das Eingangsventilglied drosselt diesen auf den Steuerdruck. Das 3/2-Wegeventil hat ein Gehäuse, welches Bohrungen für die Verbindungsstangen des Eingangsventil-Betätigungselements aufweist, wobei die Bohrungen einen größeren Durchmesser als die Verbindungsstangen aufweisen. Durch diese Bohrungen gelangt das Fluid mit dem Steuerdruck in den Raum des Ankers und damit in Richtung des Entspannungsausgangs. Zusätzliche Fluidverbindungskanäle sind dann nicht erforderlich, können aber vorgesehen werden.

Eine leichtere Beweglichkeit sowie eine Masseeinsparung des Eingangsventil-Betätigungselements kann dadurch erreicht werden, dass das Eingangsventil-Betätigungselement Durchgangsbohrungen aufweist, durch die das Fluids strömen kann.

Die Dichtheit des entsprechenden Schließzustandes sowie die Regelbarkeit werden verbessert, wenn das Eingangsventil-Betätigungselement derart mittels einer Feder vorgespannt ist, dass es im unbetätigten Zustand das Eingangsventilglied in den Eingangsventilsitz drückt.

Besonders bevorzugt wird eine Weiterbildung des 3/2-Wegeventils, bei der mindestens ein Eingangs-Druckentlastungskanal vorhanden ist, der eine Fluidverbindung vom Eingang zur vom Anker abgewandten Seite der Führungshülse bzw. des Zapfens des Eingangsventil-Betätigungselementes bereitstellt. Auf diese Weise ist die Betätigung des Eingangsventilgliedes mittels des Eingangsventil-Betätigungselements druckentlastet.

Vorzugsweise ist der Entspannungsventilsitz vom Eingangsventilsitz aus gesehen entlang der Achse hinter dem Anker angeordnet. Entlang der Achse bedeutet hierbei nicht notwendigerweise auf der Achse, sondern ggf. lediglich parallel dazu. Ein seitlicher Versatz ist ohne weiteres möglich. Diese Anordnung ermöglicht die Bedienung des Entspannungsventilglieds durch den Anker.

Die Betätigung des Entspannungsventilglieds wird erleichtert, wenn das 3/2-Wegeventil eine zweite Betätigungskappe aufweist, welche die Bewegungen des Ankers an das Entspannungsventilglied überträgt, wobei die zweite Betätigungskappe siebartig durchbrochen ist. Dies verbessert die Strömungseigenschaften des Fluids durch das Ventil am Anker vorbei in Richtung des Entspannungsausgangs.

Die Dichtheit des entsprechenden Schließzustandes sowie die Regelbarkeit werden verbessert, wenn das Entspannungsventilglied derart mittels einer Feder vorgespannt ist, dass es im unbetätigten Zustand in den Entspannungsventilsitz gedrückt wird.

Zum geringen Stromverbrauch trägt ferner bei, dass mindestens ein Ausgangs-Druckentlastungskanal vorhanden ist, der eine Fluidverbindung von dem Bereich, in dem sich der Anker befindet, zur vom Anker abgewandten Seite des Entspannungsventilglieds bereitstellt. Das Entspannungsventilglied kann hierbei beispielsweise in einem Führungszylinder geführt werden. Auf diese Weise ist die Betätigung des Entspannungsventilgliedes vollständig druckentlastet.

Die beidseitige Druckentlastung bewirkt, dass die nötige Magnetkraft und somit der Ansteuerstrom nahezu unabhängig vom Versorgungsdruck des Fluids und vom Druck in dem Bereich, in dem sich der Anker befindet, werden. Insbesondere müssen die Druckunterschiede zum Einstellen nicht überwunden werden, wodurch die Kraftanforderungen an den Antrieb und somit der Stromverbrauch deutlich verringert werden.

Bei einer weiteren Ausführungsform des 3/2-Wegeventils ist der Querschnitt der vom Anker abgewandten Seite des Entspannungsventilglieds und/oder der vom Anker abgewandten Seite des Zapfens des Eingangsventil-Betätigungselements, auf den die jeweilige Druckentlastung wirkt, größer als der wirksame Querschnitt des jeweils zugehörigen Ventilsitzes.

Diese Variante des 3/2-Wegeventils kommt ohne die Federn am Entspannungsventilglied bzw. am Eingangsventil-Betätigungselement aus. Ein sicheres Verschließen der jeweiligen Ventilsitze wird in diesem Fall durch die beschriebene leichte "Verstimmung" der Druckentlastungsgeometrie erreicht. So kann beispielsweise der Wirkdurchmesser des Entspannungsventilglieds auf der vom Anker abgewandten Seite, auf die die Druckentlastung wirkt, etwas größer gestaltet werden als der Durchmesser des Entspannungsventilsitzes. Dadurch entsteht eine überschüssige Kraft, die das Entspannungsventilglied in den Entspannungsventilsitz drückt. Der Eingangsventilsitz und der Zapfen des Eingangsventil-Betätigungselements können entsprechend gestaltet werden. Diese Ausführung macht die charakteristischen Stromwerte für Öffnen und Schließen der Ventilglieder allerdings geringfügig druckabhängig. Dies kann ggf. zu Diagnosezwecken genutzt werden: Aus den Stromwerten an den jeweiligen Schaltpunkten (Anfang des Druckanstiegs oder -abfalls) kann dann auf den Druck des Fluids am Eingang und den Steuerdruck rückgeschlossen werden.

Bevorzugt wird ferner eine Weiterbildung des 3/2-Wegeventils, bei der der Eingangsventilsitz und der Entspannungsventilsitz derart beabstandet angeordnet sind, dass zwischen einer ersten Position des Ankers, in der die Betätigung des Eingangsventilglieds beginnt, und einer zweiten Position des Ankers, in der die Betätigung des Entspannungsventilglieds beginnt, ein Leerweg existiert, der mindestens so groß ist, dass sich die Betätigung des Eingangsventilglieds und die Betätigung des Entspannungsventilglieds nicht überschneiden können. Dadurch existiert eine Position des Ankers, bei der sowohl Eingangsventilglied als auch Entspannungsventilglied geschlossen sind, wodurch der Steuerdruck im Fluid gehalten wird.

Für Anwendungen mit erhöhten Sicherheitsanforderungen besonders geeignet ist das 3/2-Wegeventil, wenn es eine mit dem Anker verbundene Feder aufweist, die derart vorgespannt ist, dass das 3/2-Wegeventil dann, wenn kein elektrisches Signal vorliegt, eine Sicherheitsstellung einnimmt. Typischerweise ist die Sicherheitsstellung dadurch gegeben, dass das Entspannungsventilglied maximal geöffnet ist und das Eingangsventilglied geschlossen ist, so dass der Steuerdruck auf den Basisdruck sinkt. Die mit dem Anker verbundene Feder muss deutlich stärker sein als die ggf. vorhandene Feder am Entspannungsventilglied.

Das Fluid kann besonders leicht durch das 3/2-Wegeventil strömen, wenn der Anker als Zylindermagnet mit mindestens einer parallel zur Achse angeordneten Bohrung ausgebildet ist. Bevorzugt handelt es sich um einen Hohlzylinder mit einer zentralen Bohrung.

Um den Anker effizienter und genauer positionieren zu können, weist der elektromagnetische Antrieb zwei Spulen auf. Diese sind bezogen auf die Achse radial außerhalb des Ankers angeordnet, also zueinander beabstandet um die Steuerkammer herum. Die zwei Spulen sind entweder in Serie geschaltet und gegenläufig gewickelt, oder gleichsinnig gewickelt und gegensinnig verschaltet. Beide Anordnungen habe die gleiche Wirkung, allerdings wird die zweite Variante bevorzugt, da dann die Herstellungskosten in aller Regel geringer sind.

Unerwünschte äußere Streufelder können minimiert und die Effizienz des Antriebs erhöht werden, wenn der elektromagnetische Antrieb eine zylindrische Rückschlusshülse aus magnetisch leitendem Material aufweist. Diese ist bezogen auf die Achse radial außerhalb der Spulen angeordnet.

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Schnittansicht des 3/2-Wegeventils, wobei der Steuerausgang zu sehen ist;
- Fig. 2: eine schematische Schnittansicht des 3/2-Wegeventils in einer Entspannungsposition;
- Fig. 3: eine schematische Schnittansicht des 3/2-Wegeventils in der Halteposition;
- Fig. 4: eine schematische Schnittansicht des 3/2-Wegeventils in einer Druckaufbauposition; und
- Fig. 5: eine schematische Schrägansicht des Eingangsventil-Betätigungselements des 3/2-Wegeventils.

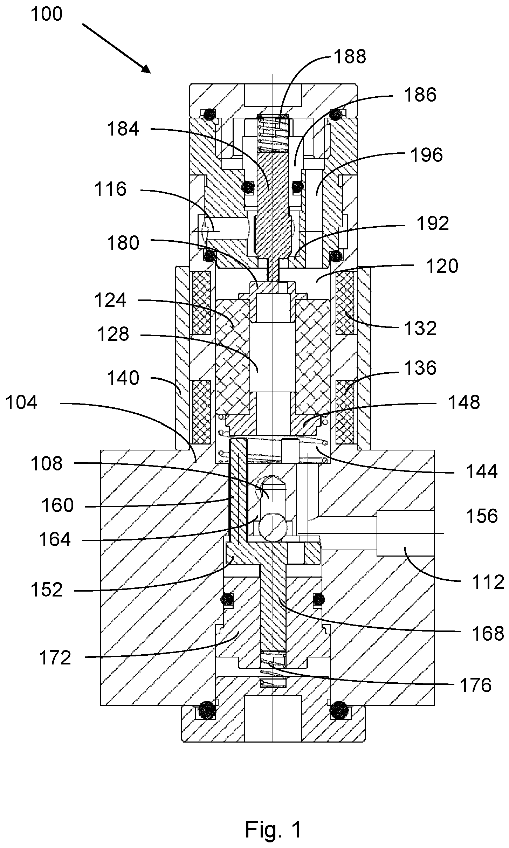

Fig. 1 zeigt ein 3/2-Wegeventil 100 mit einem Gehäuse 104, einem Eingang 108 für ein unter Druck stehendes Fluid, einem Steuerausgang 112 für das Fluid sowie einem Entspannungsausgang 116. Es können auch mehrere Entspannungsausgänge vorhanden sein, um den Fluiddurchsatz zu erhöhen. Der Eingang befindet sich in dieser Darstellung hinten. Als Fluid kommt typischerweise Druckluft mit einem Druck von bis zu 8 bar zum Einsatz. Im Inneren des Gehäuses 104 befindet sich ein Innenraum bzw. eine Steuerkammer 120, die im Wesentlichen zylindrisch sein kann und in der das Fluid bereits den eingestellten Steuerdruck aufweist. Der Steuerausgang 112 ist mit der Steuerkammer offen verbunden. An dieser Stelle kann z.B. direkt ein pneumatischer Antrieb für ein Prozess-Stellventil o.ä. angeschlossen werden.

In der Steuerkammer befindet sich ein Anker 124, welcher als Ring- bzw. Zylindermagnet mit einer zentralen Bohrung 128 ausgebildet ist. Der Anker 124 ist axial magnetisiert, z.B. Nordpol oben, Südpol unten, und kann sich in der Steuerkammer 120 leichtgängig auf und ab bewegen.

Zwei Spulen 132, 136 sind ringförmig und zueinander beabstandet um die Steuerkammer 120 herum angeordnet, um den Anker 124 anzutreiben und um - abhängig von einem elektrischen Eingangssignal (typischerweise ein vorgegebener Strom) - seine Position einzustellen. Die beiden Spulen 132, 136 des elektromagnetischen Antriebs sind entweder elektrisch in Serie geschaltet und gegenläufig / gegensinnig gewickelt, oder gleichsinnig gewickelt, aber gegensinnig verschaltet, was bedeutet, dass der Strom in jeweils entgegengesetzter Richtung durch die beiden Spulen fließt.

Werden sie bestromt, so ergibt sich je nach Stromrichtung ein Magnetfeld, welches mit dem Anker-Magneten 124 wechselwirkt und auf diesen eine Kraft in axialer Richtung bewirkt. Diese hängt von der Stärke des Magnetfelds der Spulen und damit von der Stromstärke ab. Folglich kann die Position des Ankers 124 durch die Stromstärke beliebig eingestellt werden, da es ein Gleichgewicht zwischen der Magnetkraft und der Summe aller auftretenden Federkräfte gibt.

Zum Antrieb gehört auch eine rohrförmige Rückschlusshülse 140 aus magnetisch leitendem Material, welche die Spulen 132, 136 nach außen umgibt und die Magnetfeldform optimiert. Die Rückschlusshülse 140 trägt außerdem dazu bei, unerwünschte Streufelder zu verhindern. Der Anker 124 ist mit einer Feder 144 verbunden, die ihn in die obere Position drückt, wenn der Antrieb unbestromt ist. Dies stellt eine Sicherheitsfunktion dar.

Am unteren Ende des Ankers 124 befindet sich eine erste Betätigungskappe 148, die die Bewegung des Ankers 124 auf das Eingangsventil-Betätigungselement 152 übertragen kann, wodurch das Eingangsventil-Betätigungselement 152 das Eingangsventilglied 156 betätigt. Als Eingangsventilglied 156 kommt vorzugsweise eine glatte Kugel aus z.B. Stahl oder Keramik zum Einsatz.

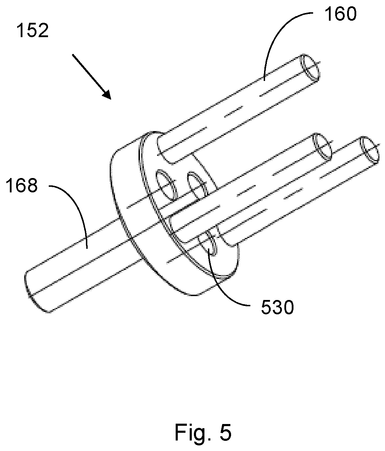

Das Eingangsventil-Betätigungselement 152 hat eine Mehrzahl von Armen bzw. Verbindungsstangen 160. Vorzugsweise sind drei solche Verbindungsstangen vorhanden, von denen in Fig. 1 aber nicht alle dargestellt sind; sie sind in Fig. 5 dargestellt. Diese greifen um den Eingangsventilsitz 164 herum, so dass das Eingangsventilglied 156 von der vom Anker 124 abgewandten Seite aus betätigt werden kann.

Das Eingangsventil-Betätigungselement 152 hat ferner einen Zapfen 168, der in einer Führungshülse 172 geführt wird. An diesem greift eine Feder 176 an, die so vorgespannt ist, dass sie über das Eingangsventil-Betätigungselement 152 das Eingangsventilglied 156 in den Eingangsventilsitz 164 drückt, wenn das Eingangsventil-Betätigungselement nicht betätigt wird.

Am oberen Ende des Ankers 124 befindet sich eine zweite Betätigungskappe 180, mit deren Hilfe der Anker 124 das Entspannungsventilglied 184 betätigen kann. Dieses kann in einem Führungszylinder 186 geführt werden. Das Entspannungsventilglied 184 wird ebenfalls durch eine entsprechend vorgespannte Feder 188 in den Entspannungsventilsitz 192 gedrückt, wenn es nicht betätigt wird. Ein Ausgangs-Druckentlastungskanal 196 stellt eine Fluidverbindung zwischen der Rückseite des Entspannungsventilglieds 184, ggf. im Führungszylinder 186, und der Steuerkammer 120 her, wodurch das Entspannungsventilglied 184 druckentlastet und somit weitgehend kräftefrei wird. Das Entspannungsventilglied 184 "schwimmt" sozusagen im Steuerdruck. Die Betätigung des Entspannungsventilglieds 184 erfordert somit nur wenig Kraft, also eine geringe Leistungsaufnahme des elektromagnetischen Antriebs. Die Feder 188 kann entsprechend schwächer ausgelegt werden, da sie nicht die Druckdifferenz zwischen Steuerdruck und Basisdruck überwinden muss. Entsprechend kann die Feder 144, die ja den Anker 124 im stromlosen Fall gegen die Feder 188 in die maximale Öffnungsposition des Entspannungsventilglieds 184 drücken muss, ebenfalls schwächer dimensioniert werden.

Am Eingangsventilglied 156 ist ebenfalls ein Druckentlastungskanal vorgesehen; dieser befindet sich in Fig. 1 allerdings vom Betrachter aus gesehen hinten und ist somit nicht dargestellt.

Durch entsprechende Positionsregelung des Ankers lässt sich der Druck in der Steuerkammer 120 somit beliebig zwischen dem maximalen Druck des Fluids (z.B. 8 bar) und dem Basisdruck (z.B. 1 bar) einstellen. Eine entsprechend feinfühlige Positionseinstellung erlaubt sogar, die Geschwindigkeit der Druckänderung einzustellen, in dem erreicht wird, dass das Eingangsventilglied 156 und/oder das Entspannungsventilglied 184 weiter oder weniger weit geöffnet wird, wodurch unterschiedlich große Querschnitte freigegeben werden können.

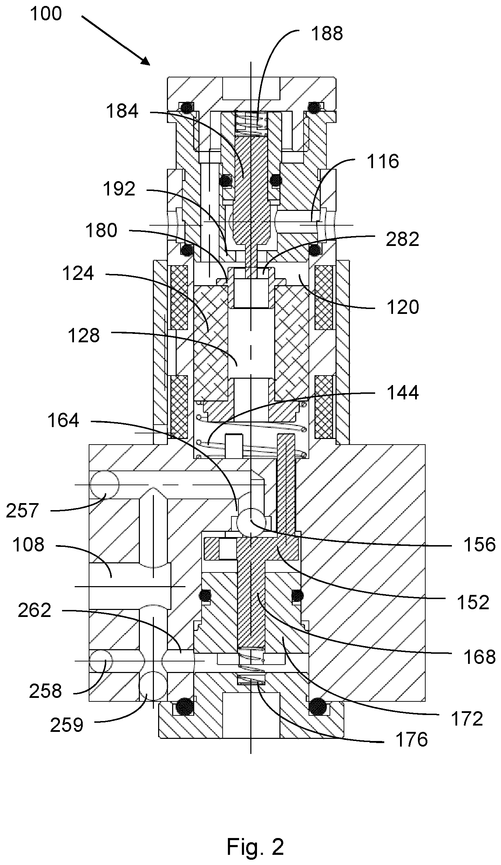

In Fig. 2 ist das 3/2-Wegeventil 100 um 120° um eine senkrechte Achse gedreht dargestellt. Der Steuerausgang zeigt in diesem Fall nach hinten und ist somit in dieser Darstellung nicht zu sehen. Dafür sind der Eingang 108 für das unter einem Eingangsdruck stehende Fluid und der dazu gehörende Druckentlastungskanal vollständig zu sehen. Ansonsten gleicht der Aufbau dem des 3/2-Wegeventils aus Fig. 1.

Der Anker 124 befindet sich in einer oberen Position, die Sicherheitsfeder 144 ist weitgehend entspannt. Die zweite Betätigungskappe 180 drückt das Entspannungsventilglied 184 gegen die Feder 188 aus dem Entspannungsventilsitz 192, wodurch der Entspannungsausgang 116 geöffnet ist und der Steuerdruck in der Steuerkammer 120 und am Steuerausgang sich dem Basisdruck am Entspannungsausgang (typischerweise Atmosphärendruck) angleicht. Dies wird dadurch erleichtert, dass das Fluid (vorzugsweise Druckluft) durch die zentrale Bohrung 128 und die siebartigen Durchbrechungen 282 der zweiten Betätigungskappe 180 strömen kann.

Da sich der Anker 124 in einer oberen Position befindet, ist er vom Eingangsventil-Betätigungselement 152 und somit vom Eingangsventilglied 156 entkoppelt. Durch die Feder 176 wird das Eingangsventil-Betätigungselement 152 nach oben gedrückt, wodurch das Eingangsventilglied 156 in den Eingangsventilsitz 164 gedrückt wird und somit den Eingang 108 verschließt.

Die weiteren am Eingang 108 erkennbaren Kugeln 257, 258, 259 sind fest angebrachte, nicht lösbare Verschlusselemente, die lediglich eine günstige Ausgestaltung der Montage der Leitungen ermöglichen. Andere Ausführungen dieser Leitungen ohne diese Kugeln sind ohne weiteres möglich.

In Fig. 2 ist die Druckentlastung des Eingangsventilglieds 156 zu erkennen. Dazu gibt es einen Eingangs-Druckentlastungskanal 262, der eine Fluidverbindung vom Eingang 108 zur vom Anker 124 abgewandten Seite der Führungshülse 172 herstellt. Der Eingangsdruck wirkt somit nicht nur auf das Eingangsventilglied 156, sondern auch auf den Zapfen 168 des Eingangsventil-Betätigungselements 152, wodurch die Betätigung des Eingangsventilglieds 156 nur eine geringe Kraft des elektromagnetischen Antriebs erfordert, da keine Druckdifferenz überwunden werden muss.

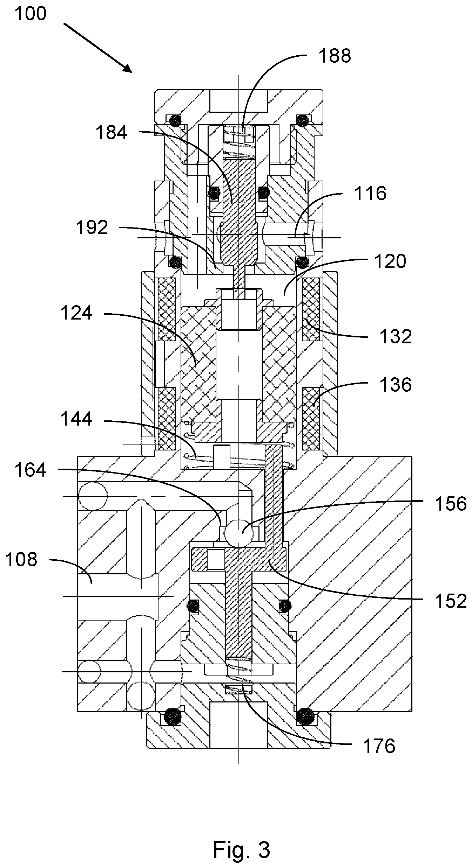

Fig. 3 zeigt das 3/2-Wegeventil 100 in der Halteposition. Aufgrund des elektrischen Signals fließt ein geeigneter Strom durch die Spulen 132, 136, wodurch eine geeignete Kraft auf den Anker 124 wirkt, die ihn gegen die Feder 144 etwas nach unten drückt, und zwar in diesem Beispiel so weit, dass das Entspannungsventilglied 184 durch die Feder 188 in den Entspannungsventilsitz 192 gedrückt wird. Dadurch ist der Entspannungsausgang 116 geschlossen, und der Druck in der Steuerkammer 120 bzw. am Steuerausgang sinkt nicht. Bei einer weiteren Bewegung nach unten ist das Entspannungsventilglied 184 von der Bewegung des Ankers 124 entkoppelt.

In dieser Position wird das Eingangsventil-Betätigungselement 152 noch nicht vom Anker 124 mitgenommen. Das Eingangsventilglied 156 wird also noch durch die Feder 176 und das Eingangsventil-Betätigungselement 152 in den Eingangsventilsitz 164 gedrückt und verschließt somit den Eingang 108. Der Druck in der Steuerkammer 120 bzw. am Steuerausgang erhöht sich also auch nicht, sondern bleibt konstant.

In diesem Zustand gibt es, von geringfügigen Leckagen abgesehen, keinen Fluidverbrauch.

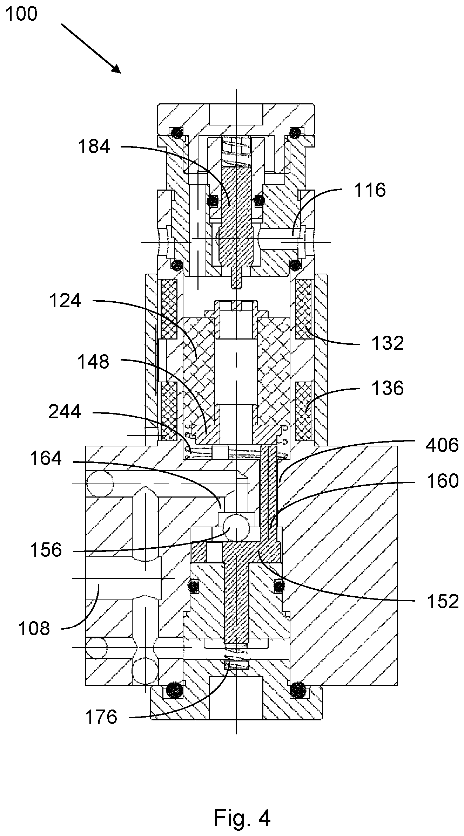

In Fig. 4 befindet sich der Anker 124 des 3/2-Wegeventils 100 in einer unteren Position. Dies wird dadurch erreicht, dass aufgrund eines anderen elektrischen Signals ein geeigneter Strom höherer Stärke durch die Spulen 132, 136 fließt, wodurch eine höhere Kraft auf den Anker 124 wirkt, die ihn gegen die Feder 144 weiter nach unten drückt. Das Entspannungsventilglied 184 ist jetzt von der Bewegung des Ankers 124 entkoppelt, der Entspannungsausgang 116 weiterhin verschlossen, so dass der Steuerdruck nicht sinkt.

In dieser Position drückt der Anker 124 mittels der ersten Betätigungskappe 148 die Verbindungsstangen 160 des Eingangsventil-Betätigungselements 152 nach unten. Das Eingangsventil-Betätigungselement 152 senkt sich gegen die Feder 176 und betätigt auf diese Weise das Eingangsventilglied 156, das sich aus dem Eingangsventilsitz 164 senken kann. Der Eingang 108 für das mit einem Druck beaufschlagte Fluid wird somit freigegeben. Da die im Gehäuse vorhandenen Bohrungen 406 für die Verbindungsstangen 160 des Eingangsventil-Betätigungselements 152 einen hinreichend größeren Durchmesser als die Verbindungsstangen 160 haben, strömt das Fluid unter Druck durch diese Bohrungen 406 in die Steuerkammer 120, wodurch sich der Druck dort und am Steuerausgang entsprechend erhöht. Vorzugsweise sind noch weitere Bohrungen vorhanden, die den Bereich, der in Strömungsrichtung hinter dem Eingangsventilsitz liegt, mit der Steuerkammer verbinden. Diese sind jedoch nicht dargestellt.

Fig. 5 zeigt ein Eingangsventil-Betätigungselement 152, das in erfindungsgemäßen 3/2-Wegeventilen eingesetzt werden kann. Die - vorzugsweise drei - Verbindungsstangen 160 umgreifen dabei den Eingangsventilsitz derart, dass die Bewegung des Ankers zum Eingangsventilsitz hin eine rückwärtige Betätigung des Eingangsventilglieds ermöglicht, um dieses zu öffnen. Da die Bohrungen im Ventilgehäuse, in denen die Verbindungsstangen vorzugsweise laufen, größer sein können als der Durchmesser der Verbindungsstangen 160, wird das Eingangsventil-Betätigungselement 152 vorzugsweise mittels des Zapfens 168 in einer Führungshülse geführt. Diese Bauart erlaubt es auch, den Zapfen 168 als Druckentlastungskolben zu nutzen. Um eine gute Beweglichkeit des Eingangsventil-Betätigungselements 152 zu erreichen, weist es bevorzugt Durchgangsbohrungen 530 auf. Diese erlauben ein Durchströmen des Fluids durch das Eingangsventil-Betätigungselement 152, wodurch sich der Strömungswiderstand bei Bewegungen dieses Elements signifikant verringert.

Eine Variante des 3/2-Wegeventils ohne Sicherheitsstellung ist ebenfalls möglich. Dabei kann auf die Feder 144 verzichtet werden. Im stromlosen Zustand wirkt keine Kraft auf den Anker, so dass weder Entspannungs- noch Eingangsventilglied betätigt werden. Der Steuerdruck bleibt dann unverändert. Durch ein entsprechendes elektrisches Signal, z.B. ein entsprechend gerichteter Steuerstrom durch die Spulen kann der Anker beispielsweise sowohl nach oben als auch nach unten bewegt werden, wodurch der Steuerdruck wie beschrieben erhöht oder erniedrigt werden kann. Diese Variante benötigt weniger elektrische Leistung, da der Offsetstrom zum Aufheben der Vorspannung der Feder entfällt.

Für den Fall, dass absolut kein Fluid verloren gehen darf, ist eine Variante des 3/2-Wegeventils möglich, bei der die Druckentlastung am Eingangsventilglied bzw. Engangsventil-Betätigungselement und/oder am Entspannungsventilglied an Stelle von Kolben, die in Führungshülsen bzw. Führungszylindern laufen, durch Membranen verwirklicht wird.

### Glossar

### 3/2-Wegeventil

Wegeventile dienen in der Fluidtechnik dazu, den Weg für das Arbeitsmedium (z.B. Druckluft oder Hydraulikflüssigkeit) freizugeben, zu sperren oder die Durchflussrichtung zu ändern. Wegeventile werden nach der Anzahl der Anschlüsse und der Anzahl der Schaltstellungen beschrieben. Ein 3/2 Wegeventil besitzt beispielsweise drei Anschlüsse und zwei Schaltstellungen.

### Anker

Als Anker wird in der Elektrotechnik im engeren Sinn der Rotor (Läufer) von Gleichstrommaschinen und Einphasen-Reihenschlussmotoren oder der elektrisch wirksame Teil des Rotors bezeichnet - wobei Rotor nicht zwingend bedeutet, dass das Teil rotiert. Als Anker wird weiterhin der bewegliche Eisenkern von elektrischen Relais, Schützen und Elektromagneten bezeichnet (nach https://de.wikipedia.org/wiki/Anker_(Elektrotechnik)).

### Basisdruck

Mit Basisdruck wird der minimale Druck bezeichnet, den ein in einer Anlage, Einrichtung oder Komponente enthaltenes Fluid annehmen kann. In vielen Fällen handelt es sich dabei um den Umgebungs- oder Atmosphärendruck, typischerweise also um ungefähr 1 bar.

### Eingangsventilglied, Entspannungsventilglied

Ein Ventilglied ist dasjenige Element, das eine Durchflussöffnung eines Ventils schließt, wenn es auf den Ventilsitz gepresst wird. Das Eingangsventilglied verschließt den Eingangsventilsitz hinter dem Eingang des 3/2-Wegeventils oder gibt ihn frei, während das Entspannungsventilglied den Entspannungsventilsitz vor dem Entspannungsausgang des 3/2-Wegeventils verschließt oder freigibt.

### Eingangsventilsitz, Entspannungsventilsitz

Ein Ventilsitz umrandet in der Regel eine Durchflussöffnung eines Ventils. Meist bildet der Ventilsitz das Gegenstück zum Ventilglied und ist von seiner Form her auf dieses abgestimmt. Dadurch wird einerseits erreicht, dass das Ventil dicht schließt, andererseits dass es eine ggf. gewünschte Abhängigkeit des Durchflussquerschnitts von der Positionierung des Ventilglieds aufweist. Der Eingangsventilsitz umrandet die Durchflussöffnung hinter dem Eingang des 3/2-Wegeventils, während der Entspannungsventilsitz die Durchflussöffnung vor dem Entspannungsausgang des 3/2-Wegeventils umrandet.

### elektrisches (Eingangs-)Signal

Ein elektrisches Eingangssignal kann eine elektrische Spannung einer Spannungsquelle oder ein elektrischer Strom einer Stromquelle sein. Eingangssignale können auch von Widerständen, Schaltern oder Binärkontakten erzeugt werden. Sie können sowohl analoger als auch digitaler Natur sein.

### Fluid

Fluid ist eine gemeinsame Bezeichnung für Gase und Flüssigkeiten.

### Bezugszeichen

- 100: 3/2-Wegeventil
- 104: Gehäuse
- 108: Eingang
- 112: Steuerausgang
- 116: Entspannungsausgang
- 120: Steuerkammer
- 124: Anker
- 128: zentrale Bohrung
- 132: Spule
- 136: Spule
- 140: Rückschlusshülse
- 144: Feder für Sicherheitsfunktion
- 148: erste Betätigungskappe
- 152: Eingangsventil-Betätigungselement
- 156: Eingangsventilglied
- 160: Verbindungsstange
- 164: Eingangsventilsitz
- 168: Zapfen
- 172: Führungshülse
- 176: Feder
- 180: zweite Betätigungskappe
- 184: Entspannungsventilglied
- 186: Führungszylinder
- 188: Feder
- 192: Entspannungsventilsitz
- 196: Ausgangs-Druckentlastungskanal
- 257, 258, 259: Verschlusskugel
- 262: Eingangs-Druckentlastungskanal
- 282: siebartige Durchbrechung
- 406: Bohrung für Verbindungsstange
- 530: Durchgangsbohrung des Eingangsventil-Betätigungselements

### zitierte Literatur

### zitierte Patentliteratur

DE 10 2015 122229 A1
DE 10 2015 005369 A1
DE 10 2018 124310 A1

## Patentansprüche

1. 3/2-Wegeventil (100) zum Steuern und/oder Regeln eines Steuerdrucks eines unter Druck stehenden Fluids mittels eines elektrischen Signals:
1.1 mit drei Fluid-Anschlüssen:
- einem Eingang (108) für das unter einem Eingangsdruck stehende Fluid;
- einem Steuerausgang (112) für das unter dem Steuerdruck stehende Fluid;
- einem Entspannungsausgang (116) für das Fluid gegen einen Basisdruck, der niedriger ist als der Eingangsdruck;
1.1.1 wobei mittels des 3/2-Wegeventils eine Fluidverbindung zwischen
- dem Eingang (108) und dem Steuerausgang (112), sowie
- dem Steuerausgang (112) und dem Entspannungsausgang (116) herstellbar ist;
1.1.2 wobei dem Eingang (108) ein Eingangsventilsitz (164) mit einem Eingangsventilglied (156) nachgeschaltet ist;
1.1.3 wobei dem Entspannungsausgang (116) ein Entspannungsventilsitz (192) mit einem Entspannungsventilglied (184) vorgeschaltet ist;
1.1.4 wobei sowohl das Eingangsventilglied als auch das Entspannungsventilglied jeweils eine Schließstellung haben;
1.2 mit einem Anker (124);
1.2.1 wobei der Anker (124) sowohl das Eingangsventilglied (156) als auch das Entspannungsventilglied (184) betätigt;
1.2.2 wobei sich der Anker (124) zur Betätigung linear entlang einer Achse bewegt;
1.2.3 wobei der Anker (124) ein entlang der Achse magnetisierter Permanentmagnet ist;
1.3 mit einem elektromagnetischen Antrieb, der den Anker (124) derart antreibt, dass er abhängig vom elektrischen Signal eine gewünschte Position einnimmt;
1.3.1 wobei der elektromagnetische Antrieb mindestens eine Spule (132, 136) aufweist;
1.3.1.1 wobei die Spule (132, 136) bezogen auf die Achse radial außerhalb des Ankers (124) angeordnet ist;
1.4 wobei der Anker (124) vom Eingangsventilglied (156) und vom Entspannungsventilglied (184) derart entkoppelt ist, dass das Eingangsventilglied (156) und das Entspannungsventilglied (184) einer Bewegung des Ankers (124) nur bis zur jeweiligen Schließstellung folgen;
1.5 wobei der Eingangsventilsitz (164) entlang der Achse des Ankers (124) angeordnet ist;
1.6 wobei Eingangsventilsitz (164) und Eingangsventilglied (156) derart orientiert sind, dass das Eingangsventilglied (156) zum Öffnen in Richtung vom Anker (124) weg aus dem Eingangsventilsitz (164) gehoben wird;
**dadurch gekennzeichnet, dass**
1.7 das 3/2-Wegeventil (100) ein Eingangsventil-Betätigungselement (152) aufweist:
1.7.1 wobei das Eingangsventil-Betätigungselement (152) vom Anker (124) aus um den Eingangsventilsitz (164) herumgreift und das Eingangsventilglied (156) von der vom Anker (124) abgewandten Seite aus betätigt.

2. 3/2-Wegeventil (100) nach dem unmittelbar vorhergehenden Anspruch,
**dadurch gekennzeichnet,**
2.1 dass das 3/2-Wegeventil eine erste Betätigungskappe (148) aufweist, welche Bewegungen des Ankers (124) an das Eingangsventil-Betätigungselement (152) überträgt; und
2.2 dass das Eingangsventil-Betätigungselement (152) eine Mehrzahl von vorzugsweise 3 Verbindungsstangen (160) aufweist;
2.2.1 wobei die Verbindungsstangen parallel zur Achse an dem Eingangsventilsitz (164) vorbei angeordnet sind; und
2.2.2 wobei die Verbindungsstangen von der ersten Betätigungskappe (148) betätigt werden.

3. 3/2-Wegeventil (100) nach einem der vorhergehenden Ansprüche,
**dadurch gekennzeichnet,**
3.1 dass das 3/2-Wegeventil eine parallel zur Achse angeordnete Führungshülse (172) aufweist; und
3.2 dass das Eingangsventil-Betätigungselement (152) einen Zapfen (168) aufweist, der in der Führungshülse geführt wird.

4. 3/2-Wegeventil (100) nach Anspruch 2,
4.1 wobei das 3/2-Wegeventil ein Gehäuse (104) hat,
**dadurch gekennzeichnet,**
4.2 dass das Gehäuse Bohrungen (406) für die Verbindungsstangen (160) des Eingangsventil-Betätigungselements (152) aufweist;
4.2.1 wobei die Bohrungen einen größeren Durchmesser als die Verbindungsstangen aufweisen; und/oder
4.3 dass das Eingangsventil-Betätigungselement (152) Durchgangsbohrungen (530) aufweist, die vom Fluid durchströmbar sind.

5. 3/2-Wegeventil (100) nach einem der vorhergehenden Ansprüche,
**dadurch gekennzeichnet,**
**dass** das Eingangsventil-Betätigungselement (152) derart mittels einer Feder (176) vorgespannt ist, dass es im unbetätigten Zustand das Eingangsventilglied (156) in den Eingangsventilsitz (164) drückt.

6. 3/2-Wegeventil (100) nach Anspruch 3,
**dadurch gekennzeichnet,**
**dass** mindestens ein Eingangs-Druckentlastungskanal (262) vorhanden ist, der eine Fluidverbindung vom Eingang (108) zur vom Anker (124) abgewandten Seite der Führungshülse (172) und/oder des Zapfens (168) des Eingangsventil-Betätigungselementes (152) bereitstellt.

7. 3/2-Wegeventil (100) nach einem der vorhergehenden Ansprüche,
**dadurch gekennzeichnet,**
**dass** der Entspannungsventilsitz (192) vom Eingangsventilsitz (164) aus gesehen entlang der Achse hinter dem Anker (124) angeordnet ist.

8. 3/2-Wegeventil (100) nach einem der vorhergehenden Ansprüche,
**dadurch gekennzeichnet,**
8.1 dass das 3/2-Wegeventil eine zweite Betätigungskappe (180) aufweist, welche Bewegungen des Ankers (124) an das Entspannungsventilglied (184) überträgt;
8.2 wobei die zweite Betätigungskappe siebartig durchbrochen ist.

9. 3/2-Wegeventil (100) nach einem der vorhergehenden Ansprüche,
**dadurch gekennzeichnet,**
**dass** das Entspannungsventilglied (184) derart mittels einer Feder (188) vorgespannt ist, dass es im unbetätigten Zustand in den Entspannungsventilsitz (192) gedrückt wird.

10. 3/2-Wegeventil (100) nach einem der vorhergehenden Ansprüche,
**dadurch gekennzeichnet,**
**dass** mindestens ein Ausgangs-Druckentlastungskanal (196) vorhanden ist, der eine Fluidverbindung von einem Bereich (120), in dem sich der Anker (124) befindet, zur vom Anker abgewandten Seite des Entspannungsventilglieds (184) bereitstellt.

11. 3/2-Wegeventil nach den Ansprüchen 6 und 10,
**dadurch gekennzeichnet,**
**dass** der Querschnitt der vom Anker abgewandten Seite des Entspannungsventilglieds und/oder der vom Anker abgewandten Seite des Zapfens des Eingangsventil-Betätigungselements, auf den die jeweilige Druckentlastung wirkt, größer ist als der wirksame Querschnitt des jeweils zugehörigen Ventilsitzes.

12. 3/2-Wegeventil (100) nach einem der vorhergehenden Ansprüche,
**dadurch gekennzeichnet,**
**dass** der Eingangsventilsitz (164) und der Entspannungsventilsitz (192) derart beabstandet angeordnet sind, dass zwischen einer ersten Position des Ankers (124), in der die Betätigung des Eingangsventilglieds (156) beginnt, und einer zweiten Position des Ankers, in der die Betätigung des Entspannungsventilglieds (184) beginnt, ein Leerweg existiert, der mindestens so groß ist, dass sich die Betätigung des Eingangsventilglieds und die Betätigung des Entspannungsventilglieds nicht überschneiden können.

13. 3/2-Wegeventil (100) nach einem der vorhergehenden Ansprüche,
**dadurch gekennzeichnet,**
**dass** das 3/2-Wegeventil eine mit dem Anker (124) verbundene Feder (144) aufweist, die derart vorgespannt ist, dass das 3/2-Wegeventil dann, wenn kein elektrisches Signal vorliegt, eine Sicherheitsstellung einnimmt.

14. 3/2-Wegeventil (100) nach einem der vorhergehenden Ansprüche,
**dadurch gekennzeichnet,**
**dass** der Anker (124) als Zylindermagnet mit mindestens einer parallel zur Achse angeordneten Bohrung (128) ausgebildet ist.

15. 3/2-Wegeventil nach einem der vorhergehenden Ansprüche,
**dadurch gekennzeichnet,**
15.1 dass der elektromagnetische Antrieb zwei Spulen (132, 136) aufweist;
15.2 wobei die Spulen (132, 136) bezogen auf die Achse radial außerhalb des Ankers (124) angeordnet sind; und
15.3 wobei die zwei Spulen (132, 136) entweder
15.3.1 in Serie geschaltet und gegenläufig gewickelt sind, oder
15.3.2 gleichsinnig gewickelt und gegensinnig verschaltet sind.

16. 3/2-Wegeventil nach einem der vorhergehenden Ansprüche,
**dadurch gekennzeichnet,**
16.1 dass der elektromagnetische Antrieb eine zylindrische Rückschlusshülse (140) aus magnetisch leitendem Material aufweist;
16.2 wobei die Rückschlusshülse (140) bezogen auf die Achse radial außerhalb der Spulen (132, 136) angeordnet ist.

## Claims

1. A 3/2-way valve (100) for controlling and/or regulating a control pressure of a pressurized fluid by means of an electrical signal:
1.1 with three fluid connections:
- an inlet (108) for the fluid under an inlet pressure;
- a control outlet (112) for the fluid under the control pressure;
- an expansion outlet (116) for the fluid against a base pressure which is lower than the inlet pressure;
1.1.1 wherein, using the 3/2-way valve, a fluid connection can be produced between
- the inlet (108) and the control outlet (112), as well as between
- the control outlet (112) and the expansion outlet (116);
1.1.2 wherein an inlet valve seat (164) with an inlet valve member (156) is connected downstream of the inlet (108);
1.1.3 wherein an expansion valve seat (192) with an expansion valve member (184) is connected upstream of the expansion outlet (116);
1.1.4 wherein both the inlet valve member and the expansion valve member each have a closed position;
1.2 with an armature (124);
1.2.1 wherein the armature (124) actuates both the inlet valve member (156) and the expansion valve member (184);
1.2.2 wherein the armature (124) moves linearly along an axis for actuation;
1.2.3 wherein the armature (124) is a permanent magnet magnetized along the axis;
1.3 with an electromagnetic drive which drives the armature (124) in such a way that it assumes a desired position depending on the electrical signal;
1.3.1 wherein the electromagnetic drive comprises at least one coil (132, 136);
1.3.1.1 wherein the coil (132, 136) is arranged radially outside the armature (124) with respect to the axis;
1.4 wherein the armature (124) is decoupled from the inlet valve member (156) and the expansion valve member (184) such that the inlet valve member (156) and the expansion valve member (184) follow a movement of the armature (124) only up to the closed position of each;
1.5 wherein the inlet valve seat (164) is arranged along the axis of the armature (124);
1.6 wherein the inlet valve seat (164) and the inlet valve member (156) are oriented such that the inlet valve member (156), for opening, is lifted out of the inlet valve seat (164) in the direction away from the armature (124);
**characterized in that**
1.7 the 3/2-way valve (100) has an inlet valve actuating element (152)
1.7.1 wherein the inlet valve actuating element (152), going out from the armature (124), engages around the inlet valve seat (164) and actuates the inlet valve member (156) from the side facing away from the armature (124).

2. The 3/2-way valve (100) according to the immediately preceding claim,
**characterized in that**
2.1 the 3/2-way valve has a first actuating cap (148) which transmits movements of the armature (124) to the inlet valve actuating element (152); and
2.2 **in that** the inlet valve actuating element (152) has a plurality of preferably 3 connecting rods (160);
2.2.1 wherein the connecting rods are arranged parallel to the axis, passing by the inlet valve seat (164); and
2.2.2 wherein the connecting rods are actuated by the first actuating cap (148).

3. The 3/2-way valve (100) according to any of the preceding claims,
**characterized in that**
3.1 the 3/2-way valve has a guide sleeve (172) arranged parallel to the axis; and
3.2 **in that** the inlet valve actuating element (152) has a pin (168) which is guided in the guide sleeve.

4. The 3/2-way valve (100) according to claim 2,
4.1 wherein the 3/2-way valve has a housing (104),
**characterized in that**
4.2 the housing has bores (406) for the connecting rods (160) of the inlet valve actuating element (152);
4.2.1 wherein the bores have a larger diameter than the connecting rods; and/or
4.3 **in that** the inlet valve actuating element (152) has through-bores (530) through which the fluid can flow.

5. The 3/2-way valve (100) according to any of the preceding claims,
**characterized in that**
the inlet valve actuating element (152) is pretensioned by a spring (176) such that, in the unactuated state, it presses the inlet valve member (156) into the inlet valve seat (164).

6. The 3/2-way valve (100) according to claim 3,
**characterized in that**
at least one inlet pressure expansion channel (262) is provided which provides a fluid connection from the inlet (108) to the side of the guide sleeve (172) and/or of the pin (168) of the inlet valve actuating element (152) facing away from the armature (124).

7. The 3/2-way valve (100) according to any of the preceding claims,
**characterized in that**
the expansion valve seat (192) is arranged along the axis behind the armature (124), as seen from the inlet valve seat (164).

8. The 3/2-way valve (100) according to any of the preceding claims,
**characterized in that**
8.1 the 3/2-way valve has a second actuating cap (180) which transmits movements of the armature (124) to the expansion valve member (184);
8.2 wherein the second actuating cap is perforated in a sieve-like manner.

9. The 3/2-way valve (100) according to any of the preceding claims,
**characterized in that**
the expansion valve member (184) is pretensioned by a spring (188) such that in the unactuated state it is pressed into the expansion valve seat (192).

10. The 3/2-way valve (100) according to any of the preceding claims,
**characterized in that**
at least one outlet pressure expansion channel (196) is provided which provides a fluid connection from a region (120) in which the armature (124) is located to the side of the expansion valve member (184) facing away from the armature.

11. The 3/2-way valve according to claims 6 and 10,
**characterized in that**
the cross section of the side of the expansion valve member facing away from the armature and/or of the side of the pin of the inlet valve actuating element facing away from the armature, on which the pressure expansion acts in each case, is larger than the effective cross section of the associated valve seat.

12. The 3/2-way valve (100) according to any of the preceding claims,
**characterized in that**
the inlet valve seat (164) and the expansion valve seat (192) are arranged at a distance from each other such that, between a first position of the armature (124) in which the actuation of the inlet valve member (156) begins and a second position of the armature in which the actuation of the expansion valve member (184) begins, there is an idle travel path which is at least large enough that the actuation of the inlet valve member and the actuation of the expansion valve member cannot overlap.

13. The 3/2-way valve (100) according to any of the preceding claims,
**characterized in that**
the 3/2-way valve has a spring (144) connected to the armature (124) which is pretensioned such that the 3/2-way valve assumes a safety position when no electrical signal is present.

14. The 3/2-way valve (100) according to any of the preceding claims,
**characterized in that**
the armature (124) is designed as a cylindrical magnet with at least one bore (128) arranged parallel to the axis.

15. The 3/2-way valve according to any of the preceding claims,
**characterized in that**
15.1 the electromagnetic drive has two coils (132, 136);
15.2 wherein the coils (132, 136) are arranged radially outside the armature (124) with respect to the axis; and
15.3 wherein the two coils (132, 136) are either
15.3.1 connected in series and wound in opposite directions, or
15.3.2 are wound in the same direction and connected in opposite directions.

16. The 3/2-way valve according to any of the preceding claims,
**characterized in that**
16.1 the electromagnetic drive has a cylindrical magnetic return sleeve (140) made of magnetically conductive material;
16.2 wherein the magnetic return sleeve (140) is arranged radially outside the coils (132, 136) with respect to the axis.

## Revendications

1. Distributeur 3/2 (100) permettant de commander et/ou de réguler une pression de commande d'un fluide sous pression à l'aide d'un signal électrique :
1.1 comportant trois raccords de fluide :
- une entrée (108) pour le fluide soumis à une pression d'entrée ;
- une sortie de commande (112) pour le fluide soumis à la pression de commande ;
- une sortie de détente (116) pour le fluide contre une pression de base qui est inférieure à la pression d'entrée ;
1.1.1 dans lequel, à l'aide du distributeur 3/2, une communication de fluide peut être établie entre
- l'entrée (108) et la sortie de commande (112), et
- la sortie de commande (112) et la sortie de détente (116) ;
1.1.2 dans lequel un siège de soupape d'entrée (164) comportant un élément de soupape d'entrée (156) est monté en aval de l'entrée (108) ;
1.1.3 dans lequel un siège de soupape de détente (192) comportant un élément de soupape de détente (184) est monté en amont de la sortie de détente (116) ;
1.1.4 dans lequel l'élément de soupape d'entrée et l'élément de soupape de détente ont respectivement une position de fermeture ;
1.2 comportant une armature (124) ;
1.2.1 dans lequel l'armature (124) actionne à la fois l'élément de soupape d'entrée (156) et l'élément de soupape de détente (184) ;
1.2.2 dans lequel l'armature (124) se déplace linéairement le long d'un axe pour l'actionnement ;
1.2.3 dans lequel l'armature (124) est un aimant permanent magnétisé le long de l'axe ;
1.3 comportant un entraînement électromagnétique qui entraîne l'armature (124) de manière à ce qu'elle prenne une position souhaitée en fonction du signal électrique ;
1.3.1 dans lequel l'entraînement électromagnétique présente au moins une bobine (132, 136) ;
1.3.1.1 dans lequel la bobine (132, 136) est disposée radialement à l'extérieur de l'armature (124) par rapport à l'axe ;
1.4 dans lequel l'armature (124) est découplée de l'élément de soupape d'entrée (156) et de l'élément de soupape de détente (184) de telle sorte que l'élément de soupape d'entrée (156) et l'élément de soupape de détente (184) ne suivent un mouvement de l'armature (124) que jusqu'à la position de fermeture respective ;
1.5 dans lequel le siège de soupape d'entrée (164) est disposé le long de l'axe de l'armature (124) ;
1.6 dans lequel le siège de soupape d'entrée (164) et l'élément de soupape d'entrée (156) sont orientés de telle sorte que l'élément de soupape d'entrée (156) est soulevé hors du siège de soupape d'entrée (164) pour l'ouverture dans la direction opposée à l'armature (124) ;
**caractérisé en ce que**
1.7 le distributeur 3/2 (100) présente un élément d'actionnement de soupape d'entrée (152)
1.7.1 dans lequel l'élément d'actionnement de soupape d'entrée (152) vient en prise autour du siège de soupape d'entrée (164) à partir de l'armature (124) et actionne l'élément de soupape d'entrée (156) à partir du côté opposé à l'armature (124).

2. Distributeur 3/2 (100) selon la revendication immédiatement précédente,
**caractérisé en ce**
2.1 **que** le distributeur 3/2 présente un premier capuchon d'actionnement (148) qui transmet les mouvements de l'armature (124) à l'élément d'actionnement de soupape d'entrée (152) ; et
2.2 **en ce que** l'élément d'actionnement de soupape d'entrée (152) présente une pluralité de tiges de liaison (160), de préférence 3 ;
2.2.1 dans lequel les tiges de liaison sont disposées parallèlement à l'axe au-delà du siège de soupape d'entrée (164) ; et
2.2.2 dans lequel les tiges de liaison sont actionnées par le premier capuchon d'actionnement (148).

3. Distributeur 3/2 (100) selon l'une des revendications précédentes,
**caractérisé en ce**
3.1 **que** le distributeur 3/2 présente une douille de guidage (172) disposée parallèlement à l'axe ; et
3.2 **en ce que** l'élément d'actionnement de soupape d'entrée (152) présente un tenon (168) qui est guidé dans la douille de guidage.

4. Distributeur 3/2 (100) selon la revendication 2,
4.1 dans lequel le distributeur 3/2 a un boîtier (104),
**caractérisé en ce**
4.2 **que** le boîtier présente des alésages (406) pour les tiges de liaison (160) de l'élément d'actionnement de soupape d'entrée (152) ;
4.2.1 dans lequel les alésages présentent un diamètre supérieur à celui des tiges de liaison ; et/ou
4.3 **en ce que** l'élément d'actionnement de soupape d'entrée (152) présente des alésages traversants (530) qui peuvent être traversés par le fluide.

5. Distributeur 3/2 (100) selon l'une des revendications précédentes,
**caractérisé en ce**
**que** l'élément d'actionnement de soupape d'entrée (152) est précontraint à l'aide d'un ressort (176) de telle sorte que, à l'état non actionné, il pousse l'élément de soupape d'entrée (156) dans le siège de soupape d'entrée (164).

6. Distributeur 3/2 (100) selon la revendication 3,
**caractérisé en ce**
**qu**'il existe au moins un canal de détente de pression d'entrée (262) qui fournit une liaison de fluide de l'entrée (108) vers le côté, opposé à l'armature (124), de la douille de guidage (172) et/ou du tenon (168) de l'élément d'actionnement de soupape d'entrée (152).

7. Distributeur 3/2 (100) selon l'une des revendications précédentes,
**caractérisé en ce**
**que** le siège de soupape de détente (192) est disposé derrière l'armature (124) le long de l'axe, vu depuis le siège de soupape d'entrée (164).

8. Distributeur 3/2 (100) selon l'une des revendications précédentes,
**caractérisé en ce**
8.1 **que** le distributeur 3/2 présente un second capuchon d'actionnement (180) qui transmet des mouvements de l'armature (124) à l'élément de soupape de détente (184) ;
8.2 dans lequel le second capuchon d'actionnement est percé en forme de tamis.

9. Distributeur 3/2 (100) selon l'une des revendications précédentes,
**caractérisé en ce**
**que** l'élément de soupape de détente (184) est précontraint à l'aide d'un ressort (188) de telle sorte que, à l'état non actionné, il est poussé dans le siège de soupape de détente (192).

10. Distributeur 3/2 (100) selon l'une des revendications précédentes,
**caractérisé en ce**
**qu**'il existe au moins un canal de détente de pression de sortie (196) qui fournit une communication de fluide depuis une zone (120) dans laquelle se trouve l'armature (124) vers le côté, opposé à l'armature, de l'élément de soupape de détente (184).

11. Distributeur 3/2 selon les revendications 6 et 10,
**caractérisé en ce**
**que** la section transversale du côté, opposé à l'armature, de l'élément de soupape de détente et/ou celle du côté, opposé à l'armature, du tenon de l'élément d'actionnement de soupape d'entrée, tenon sur lequel agit la détente de pression respective, est supérieure à la section transversale active du siège de soupape respectivement associé.

12. Distributeur 3/2 (100) selon l'une des revendications précédentes,
**caractérisé en ce**
**que** le siège de soupape d'entrée (164) et le siège de soupape de détente (192) sont disposés espacés de telle sorte qu'entre une première position de l'armature (124) dans laquelle l'actionnement de l'élément de soupape d'entrée (156) commence et une seconde position de l'armature dans laquelle l'actionnement de l'élément de soupape de détente (184) commence, il existe une course à vide qui est au moins suffisamment grande pour que l'actionnement de l'élément de soupape d'entrée et l'actionnement de l'élément de soupape de détente ne puissent pas se chevaucher.

13. Distributeur 3/2 (100) selon l'une des revendications précédentes,
**caractérisé en ce**
**que** le distributeur 3/2 présente un ressort (144) relié à l'armature (124), lequel ressort est précontraint de telle sorte que le distributeur 3/2 prend une position de sécurité lorsqu'aucun signal électrique n'est présent.

14. Distributeur 3/2 (100) selon l'une des revendications précédentes,
**caractérisé en ce**
**que** l'armature (124) est conçue comme un aimant cylindrique comportant au moins un alésage (128) disposé parallèlement à l'axe.

15. Distributeur 3/2 selon l'une des revendications précédentes,
**caractérisé en ce**
15.1 **que** l'entraînement électromagnétique présente deux bobines (132, 136) ;
15.2 dans lequel les bobines (132, 136) sont disposées radialement à l'extérieur de l'armature (124) par rapport à l'axe ; et
15.3 dans lequel les deux bobines (132, 136) sont soit
15.3.1 connectées en série et enroulés en sens inverse, soit
15.3.2 enroulées dans le même sens et connectées en sens inverse.

16. Distributeur 3/2 selon l'une des revendications précédentes,
**caractérisé en ce**
16.1 **que** l'entraînement électromagnétique présente une douille de court-circuit (140) cylindrique en matériau magnétiquement conducteur ;
16.2 dans lequel la douille de court-circuit (140) est disposée radialement à l'extérieur des bobines (132, 136) par rapport à l'axe.
